# EUROPÄISCHE PATENTANMELDUNG

(11) **EP 1 693 842 A2**
(43) Veröffentlichungstag der Anmeldung: **23.08.2006**
(21) Anmeldenummer: 05009160.2
(22) Anmeldetag: 26.04.2005
(51) Int. Cl.: G11B 19/00

(54) **Multimedia-Einrichtung**

(30) Priorität: 16.02.2005 DE 202005002561 U
(71) Anmelder: TARGA GmbH, 59494 Soest (DE)
(72) Erfinder: Urban, Michael, 1291 Commuguy (CH)
(74) Vertreter: Graefe, Jörg

(57) **Zusammenfassung**

Multimedia-Einrichtung (1), geeignet zur Wiedergabe und/oder Aufzeichnung von Multimedia-Daten, umfassend Mittel zum Anschluss an eine externe Anzeigevorrichtung, wobei die Multimedia-Einrichtung (1) mindestens ein kombiniertes Eingabe- und Anzeigemittel aufweist, das für eine Anzeige einer grafischen Bedienoberfläche und/oder die Wiedergabe von Multimedia-Daten eingerichtet ist.

## Beschreibung

Die vorliegende Erfindung betrifft eine Multimedia-Einrichtung, geeignet zur Wiedergabe und/oder Aufzeichnung von Multimedia-Daten, umfassend Mittel zum Anschluss an eine externe Anzeigevorrichtung.

Multimedia-Einrichtungen der eingangs genannten Art sind aus dem Stand der Technik in unterschiedlichen Ausführungsformen bereits bekannt.

Ein Nachteil der bekannten Multimedia-Einrichtungen besteht darin, dass ihre Bedienung häufig relativ kompliziert und unkomfortabel ist. Die bekannten Multimedia-Einrichtungen müssen darüber hinaus stets an eine externe Anzeigevorrichtung wie zum Beispiel an einen Fernseher, Monitor oder dergleichen angeschlossen werden, damit beispielsweise eine grafische Bedienoberfläche der Multimedia-Einrichtung angezeigt werden kann oder Multimediadaten, insbesondere Videodaten, wiedergegeben werden können.

Hier setzt die vorliegende Erfindung an.

Der vorliegenden Erfindung liegt die Aufgabe zugrunde, eine Multimedia-Einrichtung vorzuschlagen, die auch ohne Anschluss an eine externe Anzeigevorrichtung beziehungsweise ohne Aktivierung der externen Anzeigevorrichtung einfach und komfortabel genutzt und bedient werden kann.

Die Lösung dieser Aufgabe liefert eine Multimedia-Einrichtung der eingangs genannten Art mit den kennzeichnenden Merkmalen des Anspruchs 1. Die Unteransprüche betreffen bevorzugte Weiterbildungen der Erfindung.

Erfindungsgemäß wird vorgeschlagen, dass die Multimedia-Einrichtung mindestens ein kombiniertes Eingabe- und Anzeigemittel aufweist, das für eine Anzeige einer grafischen Bedienoberfläche und/oder die Wiedergabe von Multimedia-Daten eingerichtet ist. Ein wesentlicher Vorteil der erfindungsgemäßen Lösung besteht darin, dass keine externe Anzeigevorrichtung wie zum Beispiel ein Fernseher, Monitor oder dergleichen an die Multimedia-Einrichtung angeschlossen beziehungsweise eingeschaltet werden muss, damit die grafische Bedienoberfläche der Multimedia-Einrichtung angezeigt und genutzt werden kann sowie gegebenenfalls auch Multimedia-Daten aller Art, insbesondere auch Videodaten, wiedergegeben werden können. Das mindestens eine kombinierte Eingabe- und Anzeigemittel ermöglicht eine einfache und komfortable Bedienung der Multimedia-Einrichtung. Die Nutzung einer grafischen Bedienoberfläche ermöglicht insbesondere eine intuitive Bedienung und Steuerung einer Vielzahl von Funktionen, die die Multimedia-Einrichtung zur Verfügung stellt. Das mindestens eine kombinierte Eingabe- und Anzeigemittel kann beispielsweise fest an der Multimedia-Einrichtung, insbesondere an einer Vorderseite eines Gehäuses der Multimedia-Einrichtung angebracht sein kann.

In einer bevorzugten Ausführungsform wird vorgeschlagen, dass das mindestens eine kombinierte Eingabe- und Anzeigemittel um mindestens eine im Wesentlichen horizontale Achse schwenkbar an der Multimedia-Einrichtung angebracht ist. Somit kann der Benutzer der Multimedia-Einrichtung bei Bedarf das mindestens eine kombinierte Eingabe- und Anzeigemittel verschwenken, um beispielsweise die Benutzung des kombinierten Eingabe- und Anzeigemittels komfortabler zu gestalten. Die Schwenkbarkeit des kombinierten Eingabe- und Anzeigemittels hat darüber hinaus den Vorteil, dass bei eventuell auftretenden ungünstigen Lichtverhältnissen, die beispielsweise durch unmittelbar auf das kombinierte Eingabe- und Anzeigemittel einstrahlendes Licht hervorgerufen werden können, der Betrachtungswinkel des kombinierten Eingabe- und Anzeigemittels zumindest bezüglich einer im Wesentlichen horizontalen Achse verändert und damit an die individuellen Bedürfnisse des Benutzers angepasst werden kann.

Es kann in einer vorteilhaften Ausführungsform auch vorgesehen sein, dass das mindestens eine kombinierte Eingabe- und Anzeigemittel um mindestens eine im Wesentlichen vertikale Achse schwenkbar an der Multimedia-Einrichtung angebracht ist. Durch diese Maßnahme kann somit auch der Betrachtungswinkel, unter dem ein Benutzer auf das kombinierte Eingabe- und Anzeigemittel blickt, bezüglich einer im Wesentlichen vertikalen Drehachse an die Bedürfnisse des Benutzers angepasst werden. Dies kann, wie bereits oben erwähnt, insbesondere bei ungünstigen Lichtverhältnissen vorteilhaft sein, da der Betrachtungswinkel individuell eingestellt und der Beleuchtungssituation entsprechend angepasst werden kann.

Gemäß einer besonders bevorzugten Ausführungsform wird vorgeschlagen, dass das mindestens eine kombinierte Eingabe- und Anzeigemittel lösbar an der Multimedia-Einrichtung angebracht ist. Diese Ausführungsform liefert eine besondere Flexibilität und gestattet es dem Benutzer, das kombinierte Eingabe- und Anzeigemittel zu verwenden, wenn es an der Multimedia-Einrichtung angebracht oder von dieser gelöst ist.

Gemäß Anspruch 5 wird vorgeschlagen, dass das mindestens eine kombinierte Eingabe- und Anzeigemittel ein Gehäuse aufweist. Das Gehäuse erleichtert die Handhabung des mindestens einen kombinierten Eingabe- und Anzeigemittel insbesondere dann, wenn dieses lösbar an der Multimedia-Einrichtung angebracht ist.

In einer besonders vorteilhaften Ausführungsform wird vorgeschlagen, dass die Multimedia-Einrichtung Arretierungsmittel aufweist, geeignet, das Gehäuse lösbar an der, Multimedia-Einrichtung anzubringen. Die Arretierungsmittel gestatten insbesondere eine sichere Anbringung des Gehäuses des mindestens einen kombinierten Eingabe- und Anzeigemittel an der Multimedia-Einrichtung.

Zur Verbesserung der Handhabung des mindestens einen kombinierten Eingabe- und Anzeigemittels besteht die Möglichkeit, dass das Gehäuse eine Anzahl von Griffelementen aufweist.

In einer besonders bevorzugten Ausführungsform sind die Griffelemente so ausgebildet, dass sie zum Entriegeln der Arretierungsmittel geeignet sind. Beispielsweise können die Griffelemente so ausgebildet sein, dass durch einen Druck auf die Griffelemente die Arretierungsmittel entriegelt werden können und das Gehäuse anschließend aus einer entsprechenden Gehäuseaufnahme, die beispielsweise an der Vorderseite der Multimedia-Einrichtung vorgesehen sein kann, entnommen werden kann. Damit kann beispielsweise auf einen separaten Entriegelungsmechanismus verzichtet werden.

In einer besonders vorteilhaften Ausführungsform weist die Multimedia-Einrichtung Mittel für eine drahtlose Kommunikation mit dem mindestens einen kombinierten Eingabe- und Anzeigemittel auf. Auf diese Weise kann das mindestens eine kombinierte Eingabe- und Anzeigemittel kabellos betrieben werden, wodurch die Handhabung und Bedienung des kombinierten Eingabe- und Anzeigemittels komfortabler gestaltet werden kann. Das kombinierte Eingabe- und Anzeigemittel ermöglicht in diesem Ausführungsbeispiel mit Hilfe der grafischen Bedienoberfläche unter anderem eine Fernbedienung der Multimedia-Einrichtung. Ferner können Multimediadaten aller Art, beispielsweise Videodaten, kabellos auf das kombinierte Eingabe-und Anzeigemittel übertragen und mit Hilfe des kombinierten Eingabe-und Anzeigemittel wiedergegeben werden.
Das kombinierte Eingabe- und Anzeigemittel, das lösbar an der Multimedia-Einrichtung angebracht ist, ist vorzugsweise in der Weise mit der Multimedia-Einrichtung gekoppelt, dass die Hauptrechenleistung, die für den Betrieb des kombinierten Eingabe-und Anzeigemittels erforderlich ist, von den Prozessormitteln der Multimedia-Einrichtung zur Verfügung gestellt wird. Vorzugsweise wird während des Betriebs lediglich der Bildschirminhalt, der auf dem kombinierten Eingabe- und Anzeigemittel dargestellt werden soll, von der Multimedia-Einrichtung zum kombinierten Eingabe- und Anzeigemittel übertragen. Entsprechend werden Bedieneingaben, die ein Benutzer tätigt, vom kombinierten Eingabe- und Anzeigemittel zur Multimedia-Einrichtung übertragen. Das kombinierte Eingabe- und Anzeigemittel benötigt somit nicht unbedingt leistungsstarke Prozessormittel. Auch der Speicherbedarf des kombinierten Eingabe-und Anzeigemittel ist verhältnismäßig gering. Somit kann das kombinierte Eingabe- und Anzeigemittel relativ kostengünstig hergestellt werden. Um die Prozessormittel der Multimedia-Einrichtung zu entlasten und/oder die Arbeitsgeschwindigkeit des kombinierten Eingabe- und Anzeigemittels zu steigern, kann das kombinierte Eingabe- und Anzeigemittel grundsätzlich auch leistungsstarke Prozessormittel aufweisen.

In einer besonders vorteilhaften Ausführungsform wird vorgeschlagen, dass das mindestens eine kombinierte Eingabe- und Anzeigemittel erste Sender- und Empfängermittel und dass die Multimedia-Einrichtung zweite Sender- und Empfängermittel aufweist, wobei die ersten und die zweiten Sender- und Empfängermittel für eine drahtlose Verbindung der Multimedia-Einrichtung mit dem mindestens einen kombinierten Eingabe- und Anzeigemittel eingerichtet sind.

Über ein geeignetes Datenübertragungsprotokoll können die Multimedia-Einrichtung und das kombinierte Eingabe- und Anzeigemittel fortlaufend miteinander kommunizieren, so dass eine einfache und komfortable Bedienung der Multimedia-Einrichtung mit Hilfe des kombinierten Eingabe- und Anzeigemittels möglich ist und Multimedia-Daten, insbesondere Videodaten, von der Multimedia-Einrichtung zum kombinierten Eingabe- und Anzeigemittel übertragen und von diesem wiedergegeben werden können.

Vorzugsweise ist die drahtlose Verbindung eine Funkverbindung, insbesondere eine Funkverbindung nach dem IEEE 802.11-Übertragungsstandard. Auf diese Weise kann zwischen der Multimedia-Einrichtung und dem kombinierten Eingabe- und Anzeigemittel eine so genannte WLAN-Verbindung (WLAN = Wireless Local Area Network, drahtloses lokales Netzwerk) hergestellt werden. Als Datenübertragungsprotokoll kann beispielsweise das so genannte "Remote Desktop Protocol" eingesetzt werden. Die WLAN-Verbindung ermöglicht auch den Betrieb des mindestens einen kombinierten Eingabe- und Anzeigemittels in größerer Entfernung von der Multimedia-Einrichtung. Beispielsweise können das kombinierte Eingabe- und Anzeigemittel und die Multimedia-Einrichtung gleichzeitig in unterschiedlichen Räumen eines Gebäudes betreiben werden. Funkverbindungen nach dem IEEE 802.11-Übertragungsstandard stellen darüber hinaus eine ausreichende Bandbreite zur Verfügung, so dass auch umfangreichere Multimedia-Daten problemlos von der Multimedia-Einrichtung zum kombinierten Eingabe- und Anzeigemittel übertragen werden können.

In einer besonders bevorzugten Ausführungsform umfasst das kombinierte Eingabe- und Anzeigemittel mindestens ein berührungsempfindliches Eingabe- und Anzeigemittel. Das mindestens eine berührungsempfindliches Eingabe- und Anzeigemittel ermöglicht eine einfache und komfortable Bedienung der Multimedia-Einrichtung.

Dabei kann vorgesehen sein, dass das berührungsempfindliche Eingabe- und Anzeigemittel für eine Bedienung per Finger und/oder per Stift eingerichtet ist.

Vorzugsweise umfasst berührungsempfindliche Eingabe- und Anzeigemittel mindestens einen berührungsempfindlichen Bildschirm. Berührungsempfindliche Bildschirme können verhältnismäßig kostengünstig hergestellt werden.

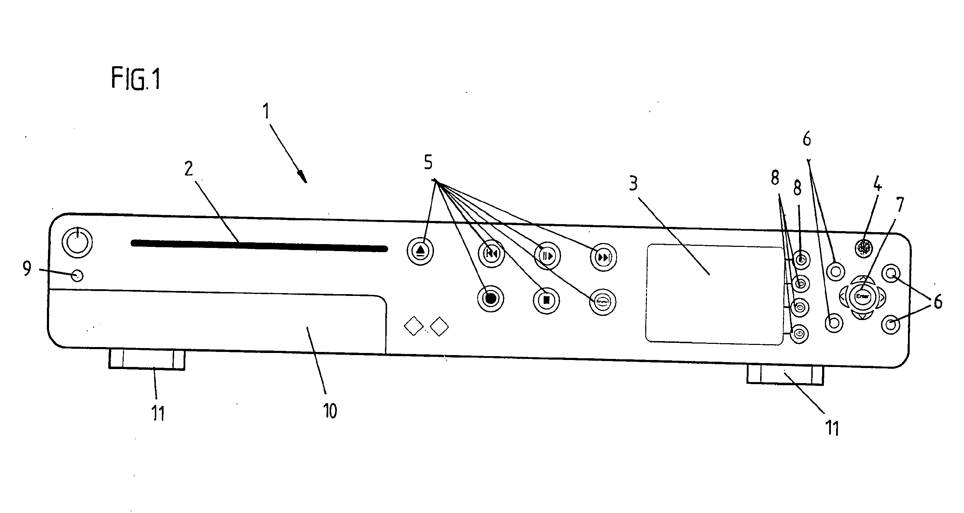

Nachfolgend werden zwei Ausführungsbeispiele einer Multimedia-Einrichtung unter Bezugnahme auf die beiliegenden Zeichnungen näher beschrieben. Darin zeigen
- Fig. 1: eine Vorderansicht einer Multimedia-Einrichtung gemäß einer ersten Ausführungsform der vorliegenden Erfindung;
- Fig. 2: eine Vorderansicht einer Multimedia-Einrichtung gemäß einer zweiten Ausführungsform der vorliegenden Erfindung.
Zunächst wird auf Fig. 1 Bezug genommen, in der eine erste Ausführungsform einer Multimedia-Einrichtung 1 gezeigt ist.
Die Multimedia-Einrichtung 1 weist in diesem Ausführungsbeispiel unter anderem eine Hauptplatine, Zentralprozessormittel, Grafikprozessormittel, Speichermittel, mindestens ein Festplattenlaufwerk und ein optisches Plattenlaufwerk 2 auf, die in einem Gehäuse der Multimedia-Einrichtung 1 untergebracht sind. Das optische Plattenlaufwerk 2 kann vorzugsweise ein DVD-Laufwerk sein, welches DVD-Medien aller Art sowie CD-Medien auslesen und vorzugsweise auch beschreiben kann. Dabei kann vorzugsweise ein optisches Plattenlaufwerk 2 in kompakter Bauform mit geringer Stromaufnahme eingesetzt werden, um den Stromverbrauch und das Betriebsgeräusch der Multimedia-Einrichtung 1 zu reduzieren. Es kann alternativ auch vorgesehen sein, dass ein optisches Plattenlaufwerk 2 mit höherer Leistungsaufnahme und größerer Bauform verwendet wird. Das optische Plattenlaufwerk 2 kann vorzugsweise sämtliche gängigen Formate optischer Platten lesen und beschreiben. Dabei kann vorgesehen sein, dass auch sogenannte Dual-Layer-Medien, Double-Layer-Medien und Blue-Ray-Disc-Medien mit Hilfe des optischen Plattenlaufwerks 2 gelesen und beschrieben werden können.

Vorzugsweise werden für die Multimedia-Einrichtung 1 Systemkomponenten eingesetzt, die insbesondere für stromsparende stationäre Computer oder tragbare Computer entwickelt wurden, um den Stromverbrauch und die Lärmentwicklung während des Betriebs der Multimedia-Einrichtung 1 zu reduzieren. Die Multimedia-Einrichtung 1 kann bei entsprechender Wahl der Systemkomponenten auch ohne aktiven Lüfter ausgeführt sein und passiv gekühlt werden.

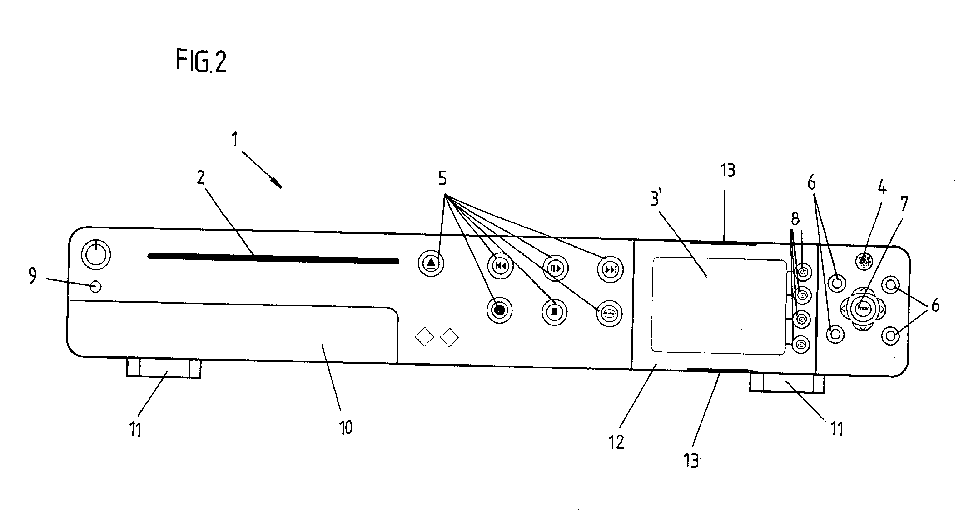

Die Multimedia-Einrichtung 1 umfasst ein kombiniertes Eingabe- und Anzeigemittel, das in diesem Ausführungsbeispiel ein berührungsempfindliches Eingabe- und Anzeigemittel 3, das mit einem hier nicht explizit dargestellten Stift, der zur Vermeidung von Beschädigungen der Oberfläche des berührungsempfindlichen Eingabe- und Anzeigemittels 3 vorzugsweise eine Kunststoffspitze aufweist, und/oder mit einem Finger des Benutzers bedient werden kann. Das berührungsempfindliche Eingabe- und Anzeigemittel 3 kann, wie hier im ersten Ausführungsbeispiel gezeigt, fest an einer Vorderseite des Gehäuses der Multimedia-Einrichtung 1 angebracht sein. Das berührungsempfindliche Eingabe- und Anzeigemittel 3 kann auch schwenkbar, insbesondere um eine im Wesentlichen horizontale Achse nach oben schwenkbar, an der Vorderseite der Multimedia-Einrichtung 1 angebracht sein. Es kann auch vorgesehen sein, dass das berührungsempfindliche Eingabe- und Anzeigemittel 3 um eine im Wesentlichen vertikale Achse schwenkbar an der Multimedia-Einrichtung 1 angebracht ist. In einer alternativen Ausführungsform, die in Fig. 2 dargestellt ist und weiter unten näher beschrieben wird, besteht die Möglichkeit, dass das berührungsempfindliche Eingabe-und Anzeigemittel 3 lösbar an der Multimedia-Einrichtung 1 angebracht ist. Auf dem berührungsempfindlichen Eingabe- und Anzeigemittel 3 können insbesondere Multimediadaten aller Art, insbesondere Texte, Grafiken, Bilder, elektronische Programminformationen oder auch Videodaten sowie vorzugsweise auch eine grafische Bedienoberfläche der Multimedia-Einrichtung 1 dargestellt werden.

Das berührungsempfindliche Eingabe- und Anzeigemittel 3, das insbesondere als berührungsempfindlicher Bildschirm ausgebildet ist, kann beispielsweise eine grafische Auflösung von 320 x 240, 640 x 480, 800 x 600 oder 1024 x 768 Bildpunkten besitzen. Abhängig von der gewünschten Höhe des Gehäuses der Multimedia-Einrichtung 1 kann die Größe des berührungsempfindlichen Eingabe- und Anzeigemittels 3 und/oder die grafische Auflösung entsprechend angepasst werden. Das berührungsempfindliche Eingabe- und Anzeigemittel 3 kann beispielsweise auf der CSTN-, der TFT-LCD-, der amorphen Silizium TFT-LCD-, der Niedrigtemparatur-Polysilizium-TFT-LCD-, der BEM-, oder der OLED-Technologie basieren.

Während des Betriebs der Multimedia-Einrichtung 1 kann beispielsweise eine grafische Bedienoberfläche auf dem berührungsempfindlichen Eingabe- und Anzeigemittel 3 dargestellt werden, ohne dass ein externes Anzeigegerät wie zum Beispiel ein Fernsehgerät, Monitor oder dergleichen angeschlossen beziehungsweise eingeschaltet sein muss. Mit Hilfe des Stifts und/oder eines Fingers kann der Benutzer auf dem berührungssensitiven Eingabe- und Anzeigemittel 3 Bedieneingaben vornehmen, die mittels einer geeigneten Software verarbeitet werden können. Beispielsweise können auf diese Weise Aufnahmezeiten für Rundfunk- oder Fernsehsendungen, die mit Hilfe der Multimedia-Einrichtung 1 aufgezeichnet werden sollen, eingegeben werden.

Auf dem berührungsempfindlichen Eingabe- und Anzeigemittel 3 können die Bedienoberfläche, grafische Informationen, Textinformationen und/oder Multimediadaten aller Art in entsprechend angepasster und skalierter Form dargestellt werden, die wahlweise auch gleichzeitig auf einer aktivierten externen Anzeigevorrichtung wie zum Beispiel auf einem eingeschalteten Fernsehgerät, Monitor oder dergleichen dargestellt werden können. Es kann auch vorgesehen sein, dass auf dem berührungsempfindlichen Eingabe-und Anzeigemittel 3 grafische Informationen, Textinformationen und/oder Multimediadaten angezeigt beziehungsweise wiedergegeben werden, die von denjenigen verschieden sind, die gleichzeitig auf dem eingeschalteten Fernsehgerät, Monitor oder dergleichen dargestellt werden. Beispielsweise können auf dem Fernsehgerät Multimediadaten (beispielsweise Videodaten) angezeigt werden, während gleichzeitig auf dem berührungsempfindlichen Eingabe- und Anzeigemittel 3 die grafische Bedienoberfläche, elektronische Programminformationen, aktuelle Nachrichten usw. dargestellt werden. Es soll an dieser Stelle noch einmal betont werden, dass keine externe Anzeigevorrichtung angeschlossen beziehungsweise eingeschaltet sein muss, damit die Bedienoberfläche, Multimediadaten und dergleichen auf dem berührungsempfindlichen Eingabe- und Anzeigemittel 3 angezeigt beziehungsweise wiedergegeben werden können.

Das berührungsempfindliche Eingabe- und Anzeigemittel 3 ermöglicht somit insbesondere eine komfortable Steuerung und/oder Programmierung der Multimedia-Einrichtung 1, ohne dass die Multimedia-Einrichtung 1 zwingend an einer externen Anzeigevorrichtung angeschlossen oder die letztgenannte eingeschaltet sein muss. Das berührungsempfindliche Eingabe- und Anzeigemittel 3 kann folglich als zweite Anzeigevorrichtung von der Software der Multimedia-Einrichtung 1 angesprochen werden und beispielsweise die grafische Bedienoberfläche anzeigen. Das berührungsempfindliche Eingabe- und Anzeigemittel 3 dient somit nicht nur zur Anzeige von grafischen Informationen sondern bietet darüber hinaus per Finger- oder Stifteingabe eine komfortable Möglichkeit zur Steuerung und/oder Programmierung der Multimedia-Einrichtung 1.

Für eine möglichst exakte und komfortable Bedienung des berührungsempfindlichen Eingabe- und Anzeigemittels 3 kann vorzugsweise der hier nicht explizit dargestellte Stift eingesetzt werden. Der Stift kann bei Nichtbenutzung in einer Stiftaufnahme 4, die neben dem berührungsempfindlichen Eingabe- und Anzeigemittel 3 angeordnet ist, untergebracht werden.

Ferner weist die Multimedia-Einrichtung 1 in diesem Ausführungsbeispiel seitlich neben dem berührungsempfindlichen Eingabe- und Anzeigemittel 3 vier programmierbare Tastenelemente 8 auf, die jeweils untereinander angeordnet sind. Es können auch mehr als vier programmierbare Tastenelemente 8 vorgesehen sein, wobei die Anzahl der programmierbaren Tastenelemente 8 insbesondere von der Größe des berührungsempfindlichen Eingabe-und Ausgabemittels abhängt. Vorzugsweise kann die Funktion jedes einzelnen programmierbaren Tastenelements 8 unmittelbar am berührungsempfindlichen Eingabe- und Anzeigemittel 3 angezeigt werden. Die jeweiligen Funktionen der programmierbaren Tastenelemente 8 können bereits vom Hersteller vorprogrammiert sein oder aber bei Bedarf vom Benutzer der Multimedia-Einrichtung 1 eingestellt beziehungsweise geändert werden.

Auf der Vorderseite des Gehäuses der Multimedia-Einrichtung 1 sind darüber hinaus mehrere Schnellbedientasten 5 vorgesehen, die für eine Steuerung der von den Nutzern am häufigsten verwendeten Abspiel- und/oder Aufnahmefunktionen der Multimedia-Einrichtung 1 vorgesehen sind. Beispielsweise kann mit Hilfe der Schnellbedientasten 5 ein Menü aufgerufen, die Aufnahme beziehungsweise Wiedergabe von Multimediadaten gestartet, unterbrochen oder gestoppt werden. Im Radio- oder Fernsehbetrieb kann beispielsweise per Tastendruck zwischen verschiedenen Sendern umgeschaltet werden oder die Aufzeichnung von Radio- oder Fernsehsendungen auf der Festplatte oder einer optischen Platte, die sich im optischen Plättenlaufwerk 2 befindet, gestartet, unterbrochen oder gestoppt werden.

Auf der Vorderseite des Gehäuses der Multimedia-Einrichtung 1 sind in diesem Ausführungsbeispiel weitere Funktionstasten 6, die zumindest teilweise vorprogrammiert oder vom Benutzer frei programmierbar sein können, sowie eine Anzahl von Navigationstasten 7 vorgesehen, die dem Nutzer eine intuitive Steuerung und Auswahl unterschiedlicher Menüfunktionen ermöglichen.

Hinter einer Abdeckklappe 10, die in diesem Ausführungsbeispiel auf der Vorderseite des Gehäuses der Multimedia-Einrichtung 1 angeordnet und nach vorne verschwenkbar ist, können beispielsweise mindestens ein PCMCIA-Steckplatz, ein CAM-Modul-Steckplatz, eine Speicherkartenlese- und ―schreibvorrichtung für alle herkömmlichen Speicherkartenformate, mindestens ein USB-Anschluss, Audio- und Videoeingänge, die auch digital ausgeführt sein können, ein Kopfhörerausgang, an den handelsübliche Kopfhörer angeschlossen werden können, angeordnet sein. Ferner kann hinter der Abdeckklappe 10 mindestens ein Fire-Wire-Anschluss nach dem IEEE 1394 Standard vorgesehen sein, an den zum Beispiel eine digitale Videokamera angeschlossen werden kann. Ferner können an dieser oder an anderer Stelle der Multimedia-Einrichtung 1 Anschlüsse für eine herkömmliche Computertastatur und/oder eine Computermaus vorgesehen sein. Die Abdeckklappe 10 kann alternativ auch als Schiebe-Abdeckung oder als versenkbare Abdeckung ausgeführt sein, um die Ergonomie der Multimedia-Einrichtung 1 zu verbessern.

Es besteht die Möglichkeit, dass auch eine hier ebenfalls nicht explizit gezeigte Fernbedienung eingesetzt werden kann, um eine Vielzahl von Standardfunktionen der Multimedia-Einrichtung 1 aufzurufen. Dazu umfasst die Multimedia-Einrichtung 1 in diesem Ausführungsbeispiel auf der Vorderseite des Gehäuses Empfängermittel 9, die für einen Empfang von Steuerungsinformationen von der Fernbedienung geeignet sind. Die Steuerungsinformationen können bei entsprechend eingerichtetem Empfängermittel 9 zum Beispiel per Infrarot, Bluetooth oder alternativ per Radiowellen - beispielsweise mit Übertragungsfrequenzen von 422 MHz oder 844 MHz - von der Fernbedienung zum Empfängermittel 9 der Multimedia-Einrichtung 1 übertragen und entsprechend in Steuerinformationen umgesetzt werden. Alternativ oder zusätzlich zur Fernbedienung können eine Computertastatur und vorzugsweise auch eine Computermaus oder eine Computertastatur mit integrierter Computermaus, mit denen der Benutzer Eingaben vornehmen kann, kabellos, insbesondere mit Hilfe der Empfängermittel 9, oder kabelgebunden an der Multimedia-Einrichtung 1 angeschlossen sein.

Die Multimedia-Einrichtung 1 umfasst vorzugsweise erste Sende- und Empfängermittel für eine drahtlose WLAN-Verbindung (WLAN=Wireless Local Area Network, drahtloses lokales Netzwerk), die für eine drahtlose WLAN-Verbindung mit externen WLAN-fähigen Geräten eingerichtet sind. Die Funkübertragung basiert dabei auf bekannten Übertragungsstandards (beispielsweise auf dem IEEE 801.11b-Standard oder dem IEEE 801.11g-Standard).

Die Multimedia-Einrichtung 1 kann darüber hinaus auch Bluetooth-Kommunikationsmittel aufweisen, die eine Kommunikation mit externen Geräten ermöglichen, bei denen ebenfalls der Bluetooth-Kommunikationsstandard implementiert ist.

Die Multimedia-Einrichtung 1 kann beispielsweise auf der Rückseite des Gehäuses mindestens einen Netzwerkanschluss für ein drahtgebundenes Netzwerk (LAN, Local Area Network), einen analogen Modemanschluss, einen Mikrofonanschluss, einen digitalen HDMI-Eingang für HDTV-Empfänger oder HDTV-Abspielgeräte, einen digitalen HDMI-Ausgang für HDTV-geeignete Anzeigevorrichtungen, Audioausgänge, optische und/oder koaxiale Digitaleingänge, optische und/oder koaxiale Digitalausgänge, einen VGA-Anschluss, der beispielsweise für den Anschluss eines herkömmlichen Computermonitors geeignet ist, einen digitalen DVI-Ausgang, der beispielsweise für den Anschluss eines herkömmlichen LCD-Bildschirms mit digitalem Eingang geeignet ist, einen seriellen RS-232-Anschluss, einen SCART-Eingang, einen SCART-Ausgang, einen Video- und/oder S-Video-Ausgang, mindestens einen USB-Anschluss und mindestens einen Fire-Wire-Anschluss aufweisen. Alternativ zu den SCART-Anschlüssen können auch RCA-Steckverbindungen zum Einsatz kommen. Ferner kann ein PCMCIA-Steckplatz auf der Rückseite des Gehäuses der Multimedia-Einrichtung angeordnet sein, der insbesondere für ein analoges und/oder digitales TV/Radio-Empfangsmodul vorgesehen ist. Die Multimedia-Einrichtung 1 kann auch einen RGB-Komponenteneingang und einen RGB-Komponentenausgang aufweisen. An den RGB-Komponenteneingang kann beispielsweise ein HDTV-Empfänger oder ein DVD-Abspielgerät angeschlossen werden. An den RGB-Komponentenausgang können beispielsweise Fernsehgeräte oder Projektoren angeschlossen werden. Für die Ein- und Ausgabe der RGB-, S-Videobeziehungsweise Video-Signale kommen im europäischen Raum Scart-Stecker zum Einsatz. Außerhalb von Europa kommen im Wesentlichen RCA-Stecker zum Einsatz. Komponentensignale werden in Europa und außerhalb von Europa über RCA-Stecker ausbeziehungsweise eingegeben.

In Fig. 2 ist eine Vorderansicht einer zweiten Ausführungsform der Multimedia-Einrichtung 1 dargestellt. Vom ersten Ausführungsbeispiel unterscheidet sich die in Fig. 2 dargestellte Variante dadurch, dass das berührungsempfindliche Eingabe- und Anzeigemittel 3' lösbar an der Vorderseite des Gehäuses der Multimedia-Einrichtung 1 angebracht ist. Das berührungsempfindliche Eingabe- und Anzeigemittel 3' weist ein separates Gehäuse 12 auf, das in diesem Ausführungsbeispiel zwei Griffelemente 13 und vier programmierbare Tastenelemente 8 umfasst. Es können auch mehr als vier programmierbare Tastenelemente 8 vorgesehen sein. Die Anzahl der programmierbaren Tastenelemente 8 hängt dabei insbesondere von der Größe des berührungsempfindlichen Eingabe- und Ausgabemittels 3 ab. Mit Hilfe von hier nicht explizit dargestellten Arretierungsmitteln kann das Gehäuse 12 des abnehmbaren berührungsempfindlichen Eingabe- und Anzeigemittels 3' lösbar an der Multimedia-Einrichtung 1 angebracht werden. Die Arretierungsmittel können beispielsweise durch Druck auf die Griffelemente 13 oder auf andere Weise entriegelt werden, damit das berührungsempfindliche Eingabe- und Anzeigemittel 3' von der Multimedia-Einrichtung 1 abgenommen werden kann.

Hinsichtlich seiner Funktionalität entspricht das abnehmbare berührungsempfindliche Eingabe- und Anzeigemittel 3' dem fest installierten berührungsempfindlichen Eingabe- und Anzeigemittel 3, das oben im Zusammenhang mit dem ersten Ausführungsbeispiel bereits ausführlich beschrieben wurde. Zusätzlich kann eine hier nicht explizit gezeigte zusätzliche Aufnahme für den Stift in diesem Ausführungsbeispiel im Gehäuse 12 des abnehmbaren berührungssensitiven Eingabe- und Anzeigemittels 3' vorgesehen sein.

Das abnehmbare berührungsempfindliche Eingabe- und Anzeigemittel 3' weist zur Spannungsversorgung vorzugsweise eine aufladbare Spannungsquelle auf, die insbesondere dann wieder aufgeladen werden kann, wenn das abnehmbare berührungsempfindliche Eingabe- und Anzeigemittel 3' an der Multimedia-Einrichtung 1 angebracht ist.

Ferner umfasst das abnehmbare berührungsempfindliche Eingabe-und Anzeigemittel 3' erste Sende- und Empfängermittel, die für eine drahtlose Netzwerkverbindung (WLAN-Verbindung) mit der Multimedia-Einrichtung 1 eingerichtet sind. Zwischen der Multimedia-Einrichtung 1 und dem abnehmbaren berührungsempfindlichen Eingabe- und Anzeigemittel 3' kann somit eine WLAN-Verbindung bestehen, wenn das abnehmbare berührungsempfindliche Eingabe-und Anzeigemittel 3' von der Multimedia-Einrichtung 1 entfernt wurde. Die Multimedia-Einrichtung 1 kann in diesem Ausführungsbeispiel zweite Sende- und Empfängermittel umfassen, die für eine drahtlose Netzwerkverbindung nach dem WLAN-Übertragungsstandard eingerichtet sind. Somit kann eine so genannte ad-hoc-WLAN-Verbindung (1:1-Verbindung) zwischen der Multimedia-Einrichtung 1 und dem abnehmbaren berührungsempfindlichen Eingabe- und Anzeigemittel 3' aufgebaut werden. Eine Übertragung umfangreicher Multimediadaten (beispielsweise Videodaten) per WLAN-Verbindung ist damit auf Grund der relativ hohen verfügbaren Bandbreite möglich.

Alternativ kann die Kommunikation zwischen der Multimedia-Einrichtung 1 und dem abnehmbaren berührungsempfindlichen Eingabe- und Anzeigemittel 3' auch per Bluetooth-Verbindung erfolgen. Auf Grund der relativ geringen Bandbreite eignet sich die drahtlose Bluetooth-Verbindung jedoch nicht für die Übertragung umfangreicher Multimediadaten.

Ein Vorteil der zweiten Ausführungsform besteht insbesondere darin, dass eine Bedienung der Multimedia-Einrichtung 1 aus der Ferne mit Hilfe des abnehmbaren berührungsempfindlichen Eingabe- und Anzeigemittels 3' möglich ist, auf dem die Bedienoberfläche der Multimedia-Einrichtung 1 angezeigt werden kann. Ferner können Multimedia-Daten per drahtloser Netzwerkverbindung, vorzugsweise per WLAN-Verbindung, von der Multimedia-Einrichtung 1 zum abnehmbaren berührungsempfindlichen Eingabe- und Anzeigemittel 3' und gegebenenfalls auch in umgekehrter Übertragungsrichtung übertragen werden, so dass das abnehmbare berührungsempfindlichen Eingabe- und Anzeigemittel 3' beispielsweise auch in einem relativ großen Abstand von der Multimedia-Einrichtung 1 (beispielsweise in einem Nachbarraum) zur Anzeige von Multimediadaten, der Bedienoberfläche usw. genutzt werden kann.

Zur Wiedergabe von Audiodaten kann das abnehmbare berührungsempfindliche Eingabe- und Anzeigemittel 3' mindestens einen Lautsprecher und/oder einen Kopfhöreranschluss aufweisen.

Die übrigen Komponenten und Anschlüsse der Multimedia-Einrichtung 1 gemäß der zweiten Ausführungsform entsprechen denjenigen des ersten Ausführungsbeispiels. Sie werden daher an dieser Stelle nicht noch einmal explizit erläutert.

Die in den beiden hier vorgestellten Ausführungsbeispielen offenbarte Multimedia-Einrichtung 1 kann vorzugsweise so ausgeführt sein, dass sie unter anderem für die nachfolgend aufgeführten Einsatzgebiete geeignet ist:
- CD-Spieler und CD-Rekorder;
- DVD-Spieler und DVD-Rekorder;
- Festplatten-Abspielgerät und Festplatten-Rekorder;
- Abspielen und Aufnehmen von Daten im MP3-,WMA-, WAV-Format sowie im MPEG 1-, MPEG 2-, MPEG 3-, MPEG 4-, DivX-, VCD- und Xvid-Format und/oder in anderen Kompressionsformaten;
- Anzeige von Bildern und Fotos;
- Empfang und Aufzeichnung analoger und/oder digitaler Radio-und/oder Fernsehprogramme per Antenne, Kabel oder Satellit
- Empfang elektronischer Programminformationen;
- Bild-, Film- und Radioempfang per Internet mit Aufnahmefunktion;
- Empfang von Neuigkeiten (Nachrichten, Wetter etc.);
- E-Mail-, MMS-, SMS-Empfang;
- Internet-Zugang,
- Telefonieren per Voice over IP.

## Patentansprüche

1. Multimedia-Einrichtung (1), geeignet zur Wiedergabe und/oder Aufzeichnung von Multimedia-Daten, umfassend Mittel zum Anschluss an eine externe Anzeigevorrichtung, **dadurch gekennzeichnet, dass** die Multimedia-Einrichtung (1) mindestens ein kombiniertes Eingabe- und Anzeigemittel aufweist, das für eine Anzeige einer grafischen Bedienoberfläche der Multimedia-Einrichtung (1) und/oder die Wiedergabe von Multimedia-Daten eingerichtet ist.

2. Multimedia-Einrichtung (1) nach Anspruch 1, **dadurch gekennzeichnet, dass** das mindestens eine kombinierte Eingabe- und Anzeigemittel um mindestens eine im Wesentlichen horizontale Achse schwenkbar an der Multimedia-Einrichtung (1) angebracht ist.

3. Multimedia-Einrichtung (1) nach Anspruch 1 oder 2, **dadurch gekennzeichnet, dass** das mindestens eine kombinierte Eingabe- und Anzeigemittel um mindestens eine im Wesentlichen vertikale Achse schwenkbar an der Multimedia-Einrichtung (1) angebracht ist.

4. Multimedia-Einrichtung (1) nach einem der Ansprüche 1 bis 3, **dadurch gekennzeichnet, dass** das mindestens eine kombinierte Eingabe- und Anzeigemittel lösbar an der Multimedia-Einrichtung (1) angebracht ist.

5. Multimedia-Einrichtung (1) nach einem der Ansprüche 1 bis 4, **dadurch gekennzeichnet, dass** das mindestens eine kombinierte Eingabe- und Anzeigemittel ein Gehäuse (12) aufweist.

6. Multimedia-Einrichtung (1) nach Anspruch 5, **dadurch gekennzeichnet, dass** die Multimedia-Einrichtung (1) Arretierungsmittel aufweist, geeignet, das Gehäuse (12) lösbar an der Multimedia-Einrichtung (1) anzubringen.

7. Multimedia-Einrichtung (1) nach Anspruch 5 oder 6, **dadurch gekennzeichnet, dass** das Gehäuse (12) eine Anzahl von Griffelementen (13) aufweist.

8. Multimedia-Einrichtung (1) nach Anspruch 7, **dadurch gekennzeichnet, dass** die Griffelemente (13) so ausgebildet sind, dass sie zum Entriegeln der Arretierungsmittel geeignet sind.

9. Multimedia-Einrichtung (1) nach einem der Ansprüche 1 bis 8, **dadurch gekennzeichnet, dass** die Multimedia-Einrichtung (1) Mittel für eine drahtlose Kommunikation mit dem mindestens einen kombinierten Eingabe- und Anzeigemittel aufweist.

10. Multimedia-Einrichtung (1) nach einem der Ansprüche 1 bis 9, **dadurch gekennzeichnet, dass** das mindestens eine kombinierte Eingabe- und Anzeigemittel erste Sende- und Empfängermittel aufweist und dass die Multimedia-Einrichtung (1) zweite Sende-und Empfängermittel aufweist, wobei die ersten und die zweiten Sende- und Empfängermittel für eine drahtlose Verbindung der Multimedia-Einrichtung (1) mit dem mindestens einen kombinierten Eingabe- und Anzeigemittel eingerichtet sind.

11. Multimedia-Einrichtung nach Anspruch 10, **dadurch gekennzeichnet, dass** die drahtlose Verbindung eine Funkverbindung, insbesondere eine Funkverbindung nach dem IEEE 802.11-Übertragungsstandard, ist.

12. Multimedia-Einrichtung (1) nach einem der Ansprüche 1 bis 11, **dadurch gekennzeichnet, dass** das kombinierte Eingabe- und Anzeigemittel mindestens ein berührungsempfindliches Eingabe- und Anzeigemittel (3, 3') umfasst.

13. Multimedia-Einrichtung (1) nach Anspruch 12, **dadurch gekennzeichnet, dass** das berührungsempfindliche Eingabe- und Anzeigemittel (3, 3') für eine Bedienung per Finger und/oder per Stift eingerichtet ist.

14. Multimedia-Einrichtung (1) nach Anspruch 12 oder 13, **dadurch gekennzeichnet, dass** das berührungsempfindliche Eingabe- und Anzeigemittel (3, 3') mindestens einen berührungsempfindlichen Bildschirm umfasst.
